# EUROPÄISCHE PATENTSCHRIFT

(11) **EP 0 537 695 B1**
(45) Veröffentlichungstag und Bekanntmachung des Hinweises auf die Patenterteilung: **10.04.1996**
(21) Anmeldenummer: 92117491.8
(22) Anmeldetag: 14.10.1992
(51) Int. Cl.: E02F 5/28, E02F 5/00, E02B 3/02, E02D 15/10

(54) **Verfahren zum Abtragen und Einbringen von Sedimenten, Schlicken oder anderen Materialien von einem bzw. auf einen Gewässerboden und Vorrichtung zur Durchführung des Verfahrens**
Method for removing and setting sediments, sludge or other materials from/to the underwater ground and device therefor
Procédé pour enlever et poser des sédiments, des boues ou d'autres matériaux du/sur le fond des plans d'eau et dispositif pour la mise en oeuvre de ce procédé

(30) Priorität: 16.10.1991 DE 4134195
(43) Veröffentlichungstag der Anmeldung: 21.04.1993
(73) Patentinhaber: Josef Möbius Bau-Gesellschaft (GmbH & Co.), D-22549 Hamburg (DE)
(72) Erfinder: Möbius, Werner, Dipl.-Ing., W-2000 Hamburg 65 (DE)
(74) Vertreter: Dipl.-Ing. H. Hauck, Dipl.-Ing. E. Graalfs, Dipl.-Ing. W. Wehnert, Dr.-Ing. W. Döring

(56) Entgegenhaltungen:
- DE-A- 3 622 133
- DE-U- 8 716 128

## Beschreibung

Die Erfindung bezieht sich auf eine Vorrichtung zum Abtragen und Einbringen von Sedimenten, Schlick oder anderen Materialien von einem bzw. auf einen Gewässerboden nach dem Oberbegriff des Patentanspruchs 1.

Beim Abtragen von abgelagerten Materialien von Gewässerböden, insbesondere in Hafenbereichen, wird angestrebt, eine Vermischung der Materialien mit freiem Wasser zu vermeiden. Die Ablagerungen können nämlich Kontaminationen enthalten, die ins Wasser abgegeben werden und damit das Gewässer oder eine Deponie zusätzlich belasten.

So kann es bei herkömmlichen Bagger- und Saugmethoden zu einer beträchtlichen Einschränkung der Kapazität von Spülfeldern aufgrund mitgenommenen Wassers kommen, das zur Wiedereinleitung aufbereitet werden muß.

Verfahren bzw. Vorrichtungen zum Abbau von auf der Sohle eines Hafenbeckens liegenden Schlickablagerungen oder zum Fördern von unter Wasser lagerndem Schüttgut, wie Kies, Sand oder dergleichen an die Wasseroberfläche sind aus der DE 34 39 810 bzw. DE 29 06 562 bekanntgeworden. Bei der DE 34 39 810 wird eine Druckluftglocke mit ihrem Rand bis auf die Hafenbeckensohle abgesenkt und das Wasser aus der Druckluftglocke verdrängt, bis der Schlick in der Druckluftglocke freiliegt. Dabei wird die Druckluftfüllung nach Maßgabe der abgeförderten Schlickmenge so gesteuert oder geregelt, daß in den in der Druckluftglocke befindlichem Schlick Wasser nicht erneut eindringt.

Bei der DE 34 39 810 erfolgt die Entfernung des Schlicks aus der Druckluftglocke mit Hilfe von Abbauwerkzeugen, die in der Druckluftglocke arbeiten. Der Schlick muß zwangsläufig durch das Wasser bewegt werden, so daß Verunreinigungen dabei ausgespült werden können, es sei denn, es wird eine Saugvorrichtung verwendet. Außerdem ist der apparative Aufwand beträchtlich. Bei der DE 29 06 562 hingegen wird der geschlossene und das Schüttgut aufnehmende Behälter an die Wasseroberfläche angehoben. Hierbei kann nicht verhindert werden, daß auch Wasser im Behälter aufgenommen wird.

Aus DE-U-87 16 128 ist eine Vorrichtung zum Einbau von schüttfähigem Material auf der Sohle oder der Böschung von Gewässern bekanntgeworden, bei der eine heb- und senkbare Schüttplattform in einer Reihe von schwenkbaren Klappen oder dergleichen unterteilt ist und den Klappen eine Betätigungsvorrichtung zugeordnet ist. Mit der bekannten Vorrichtung werden vor allen Dingen Steinschüttungen auf Sohlen oder Böschungen von Gewässern aufgebracht.

Aus der DE-C-36 22 133 ist eine haubenartige Ausstechform bekanntgeworden, mit der aus einer aufbereiteten Dichtungsmasse Platten aus der Dichtungsmasse ausgestochen und anschließend mit einem Hebezeug gezielt auf die abzudichtende Bodenfläche abgesenkt werden. Eine den Innenabmessungen entsprechende Lochplatte ist von einer Verstellvorrichtung in Richtung der offenen Seite der Ausstechform und von dieser fort verstellbar. Die bekannte Vorrichtung dient zum Verlegen einer Dichtungsmasse auf einer Bodenfläche über oder unter Wasser bei kontrollierter Einbaudicke und -qualität.

Der Erfindung daher liegt die Aufgabe zugrunde, eine verbesserte Vorrichtung zum Abtragen und Einbringen von Materialien von einem bzw. auf einen Gewässerboden zu schaffen, welche abzutragende bzw. einzubringende Materialien und freies Wasser sicherer voneinander trennen und apparativ und betriebstechnisch wenig aufwendig ist.

Diese Aufgabe wird durch die Merkmale des Patentanspruchs 1 gelöst.

Bei der Erfindung besteht die Aufnahmevorrichtung aus einem eine obere und eine untere Öffnung aufweisenden Rahmen, wobei der unteren Öffnung mindestens eine bewegliche Verschlußplatte mit einem Verschlußantrieb zum Bewegen der Verschlußplatte zwischen einer Öffnungs- und Schließstellung zugeordnet ist. Ferner ist eine Feststoff zurückhaltende und zumindest in einer Richtung wasserdurchlässige Druckplatte innerhalb des Rahmens bewegbar angeordnet und mittels eines Druckplattenantriebs zwischen der oberen und der unteren Öffnung verstellbar.

Erfindungsgemäß wird die Vorrichtung so in den Boden gedrückt, daß sie abzutragende Ablagerungen aufnimmt. Dann kann durch unterseitiges Schließen eine Einkapselung der Ablagerungen erreicht werden, praktisch ohne deren Position und ursprüngliche Schichtung auf dem Gewässerboden zu verändern. Im Oberbereich der Aufnahmevorrichtung befindet sich dann noch eine Wasserschicht, die mittels der durchlässigen Druckplatte und einem zugeordneten Plattenantrieb verdrängt wird, wobei sich der Aufnahmeraum der Aufnahmevorrichtung verkleinert. Dabei findet keine Vermischung oder Verwirbelung von Wasser mit dem abzutragenden Material statt, so daß es in seiner ursprünglichen Konsistenz erhalten bleibt. Die Druckplatte kann sogar eine Filterung abströmenden Wassers bzw. Entwässerung des eingeschlossenen Materials bewirken, indem ihre Durchlässe oder zugeordnetes Filtermaterial Feststoffe zurückhalten bzw. sie gegen das eingeschlossene Material gepreßt wird. Schließlich wird das eingeschlossene Material durch Anheben der Aufnahme vorzugsweise mittels einer Hubvorrichtung vom Gewässerboden entfernt und über einem geeigneten Lageort aus der Aufnahmevorrichtung freigegeben. Hierzu wird die Aufnahme geöffnet, so daß das eingeschlossene Material herausfällt und ggf. mit der Druckplatte herausgedrückt werden kann. Es versteht sich, daß vor dem Herauslassen des Materials aus der Aufnahme zunächst das Wasser oberhalb der Druckplatte entfernt werden muß. Hierzu kann zum Beispiel der Fahrer eines Baggers, an dessen Ausleger die Aufnahme angehängt ist, die Annahme so schwenken, daß das Wasser oberhalb der Druckplatte abgegeben wird.

Der Gewässerboden kann so systematisch abgearbeitet werden. Örtlich veränderlichen Höhen der Sedimente kann durch verschiedentliches Drücken der Aufnahme in den Boden Rechnung getragen werden. Wenn das Eindrücken jeweils bis zum Erreichen einer etwa übereinstimmenden Eindrückkraft vorgenommen wird, werden etwa übereinstimmende Ablagerungsvolumina entnommen. Das abgetragene Material hat einen relativ geringen Wassergehalt und eine vergleichsweise hohe Schadstoffkonzentration, wobei die Kontaminationen relativ sicher an den Feststoffen gebunden sind.

Deponien können beim Einsatz der erfindungsgemäßen Vorrichtung besser ausgenutzt werden und belasten die Umwelt geringfügiger mit verunreinigtem Altwasser. Der Einsatz der Erfindung ist daher auch für das Abtragen von feuchten Böden über Wasser geeignet.

Beim Einbringen von Material auf den Gewässerboden wird dieses in die Aufnahme eingeschlossen und auf den Gewässerboden abgesenkt, so daß eine Vermischung mit Wasser unterbunden wird. Erst am Einbringungsort wird das Material aus der geöffneten Aufnahme gedrückt, so daß es kompakt und ohne Vermischung mit Wasser auf dem Gewässerboden abgelagert wird. Mit Hilfe der Erfindung können Abtrag- und Einbringtechniken unmittelbar hintereinander angewendet werden.

Nach einer Ausgestaltung der Erfindung ist mindestens die eine Verschlußplatte von einer Reihe schwenkbarer Klappen gebildet. Sie können in vertikaler Position in den Gewässerboden gedrückt werden und aufgenommenes Material in horizontaler Lage in der Aufnahmevorrichtung sichern. Die Klappen können sich in Schließstellung aus Abdichtungsgründen seitlich etwas überlappen. Zum Schutz gegen sperrige und feste Ablagerungen kann die Aufnahme nach einer weiteren Ausgestaltung der Erfindung unterhalb der mindestens einen Verschlußplatte mindestens einen die untere Öffnung überspannenden Träger haben.

Die Druckplatte ist bevorzugt als Lochplatte mit relativ großen Durchlässen ausgebildet. Die Filterwirkung der Druckplatte kann erfindungsgemäß gewässert werden, wenn ihre Durchlässe von einem Vlies überspannt sind. Die Durchlässe der durchlässigen Platten können nach einer weiteren Ausgestaltung der Erfindung Ventile aufweisen oder jeweils aus einem Spalt bestehen. Beispielsweise können die Ventile nach außen öffnende Rückschlagventile, insbesondere Rückschlagplatten sein, die den Vorteil einer besonders einfachen Konstruktion haben. Außerdem kann die Druckplatte so positioniert werden, daß ein Spalt zwischen Aufnahme und Druckplatte entsteht. Dieser Spalt gewährleistet niedrige Abführgeschwindigkeiten des Wassers und verhindert dadurch Turbulenzen. Für eine Spaltbildung kann die Druckplatte über den oberen Rand des Rahmens hebbar sein. Der Verschluß- und/oder Druckplattenantrieb ist nach einer Ausgestaltung der Erfindung hydraulisch, so daß die Erfindung gut mit einer hydraulischen Hubvorrichtung kombiniert werden kann.

Die Erfindung wird nachfolgend anhand von Zeichnungen näher erläutert.
- Fig. 1: zeigt eine Vorrichtung nach der Erfindung im Längsschnitt.
- Fig. 2: zeigt die Vorrichtung nach Fig. 1 in Unteransicht.
- Fig. 3: zeigt Verschlußplatten einer abgewandelten Vorrichtung nach der Erfindung im Längsschnitt.

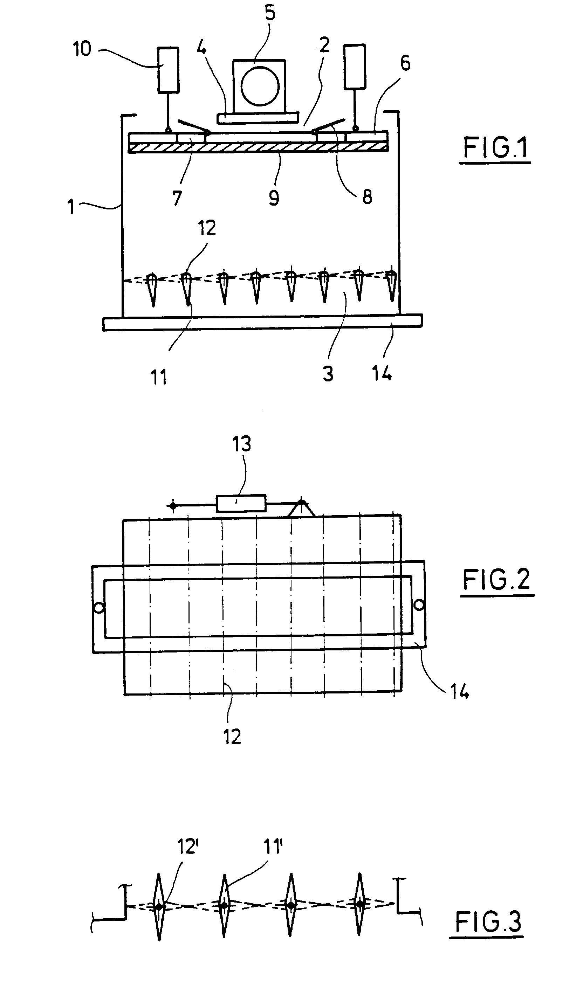

Die Vorrichtung gemäß Fig. 1 und 2 hat einen rechteckigen Rahmen 1, der eine obere Öffnung 2 und eine untere Öffnung 3 aufweist. Die obere Öffnung 2 ist in Querrichtung von einem Träger 4 überspannt, der eine Halteöse 5 für eine hydraulische Hubvorrichtung aufweist, die auf einem Ponton angeordnet ist.

Nahe der oberen Öffnung 2 ist im Rahmen 1 eine Druckplatte 6 geführt, die Durchlässe 7 aufweist. Die Durchlässe 7 können mittels Rückschlagklappen 8 verschließbar. Unterseitig ist die Druckplatte mit einem Vlies 9 bedeckt, welches die Durchlässe 7 überspannt.

Am Rahmen 1 sind Hydraulikzylinder 10 gelagert, mit denen die Druckplatte 6 innerhalb des Rahmens zwischen oberer Öffnung 2 und unterer Öffnung 3 bewegt werden kann.

Etwa in der unteren Öffnung 3 befindet sich eine Reihe schwenkbarer Klappen 11, deren Schwenkachsen 12 in Querrichtung des Rahmens 1 angeordnet sind. Ein Hydraulikzylinder 13 bildet einen Verschlußantrieb, der die lamellenartigen Klappen zwischen der in ausgezogenen Linien dargestellten Öffnungsstellung in die gestrichelt eingezeichnete Schließstellung bewegen kann, wozu zwischen Hydraulikzylinder 13 und Schwenkachsen 12 ein nicht dargestelltes Gestänge angeordnet ist.

Unterhalb der Klappen 11 und der unteren Öffnung 3 befindet sich ein aus Trägern zusammengesetzter Bodenrahmen 14. Der Rahmens 14 schützt die Klappen 11 vor Beschädigung durch sperrige und harte Ablagerungen. Der Rahmen wird z.B. an einem Baggerausleger angebracht (nicht gezeigt).

Sobald der Rahmen 1 den Gewässerboden erreicht, wird er in diesen gedrückt, wozu seine unteren Kanten relativ dünn ausgebildet sind. Beim Erreichen einer bestimmten Eindrückkraft, die bei einer hydraulischen Hub- und Absenkvorrichtung gemessen werden kann, wird der Eindrückvorgang abgebrochen, weil dann von der Aufnahme eines empirisch ungefähr bestimmbaren Materialvolumens in dem Rahmen 1 ausgegangen werden kann. Danach werden die Klappen 11 durch Betätigen des Hydraulikzylinders 13 in die gestrichelt eingezeichnete Schließstellung gebracht, so daß das abzutragende Material in der Vorrichtung eingekapselt ist.

Anschließend wird die Druckplatte 6 mittels der Hydraulikzylinder 10 zur unteren Öffnung 3 hin bewegt, wobei eine Wassersäule oberhalb des eingeschlossenen Materials durch den Spalt bzw. die Durchlässe 7 und die geöffneten Rückschlagklappen 8 aus dem sich verkleinernden Aufnahmevolumen des Rahmens 1 herausgelangt. Das Vlies 9 nimmt dabei eine Filterung des ausströmenden Wassers vor. Durch Komprimieren des eingeschlossenen Materials mittels der Druckplatte 6 kann dieses sogar gegenüber seinem ursprünglichen Zustand auf dem Gewässerboden entwässert werden.

Anschließend wird die Vorrichtung mittels der Hubvorrichtung zu einem Lagerungsort angehoben und dort nach Öffnen der Klappen 11 und gegebenenfalls unterstützt durch eine Ausdrückbewegung der Druckplatte 6 entleert. Vor der Entleerung muß das Wasser oberhalb der Druckplatte 6 entfernt werden. Dies kann z.B. durch ein Kippen des Rahmens oberhalb der Wasseroberfläche erfolgen, so daß das Wasser abläuft. Es sind jedoch auch andere Vorkehrungen denkbar, um das Wasser zu entfernen, z.B. eine Pumpe, Ablaufventile oder dergleichen.

Fig. 3 zeigt eine alternative Konstruktion von Klappen 11', die gegenüber denjenigen der Fig. 1 und 2 als zweiarmige Hebel ausgebildet sind und deshalb mit weniger Achsen 12' auskommen.

Zur Arbeit an Böschungen kann die gesamte Vorrichtung an der Halteöse 5 in den vorgegebenen Böschungswinkel verschwenkt werden.

## Patentansprüche

1. Vorrichtung zum Abtragen und Einbringen von Sedimenten, Schlicken oder anderen Materialien von einem bzw. auf einen Gewässerboden, mit einer mittels einer hydraulischen Hubvorrichtung auf den Gewässerboden absenkbaren und in diesen hineindrückbaren haubenartigen Aufnahme und Mitteln zum Verdrängen von Wasser aus dem Aufnahmeraum, dadurch gekennzeichnet, daß die Aufnahmevorrichtung aus einem eine obere und eine untere Öffnung (2, 3) aufweisenden Rahmen (1) besteht, der unteren Öffnung (3) mindestens eine bewegliche Verschlußplatte (11) mit einem Verschlußantrieb (13) zum Bewegen der Verschlußplatte zwischen einer Öffnungs- und einer Schließstellung zugeordnet ist und eine Feststoffe zurückhaltende und zumindest in einer Richtung wasserdurchlässige Druckplatte (6) innerhalb des Rahmens (1) bewegbar angeordnet und mittels eines Druckplattenantriebs (10) zwischen der oberen Öffnung (2) und der unteren Öffnung (3) verstellbar ist.

2. Vorrichtung nach Anspruch 1, dadurch gekennzeichnet, daß die mindestens eine Verschlußplatte von einer Reihe schwenkbarer Klappen (11, 11') gebildet ist.

3. Vorrichtung nach Anspruch 1 oder 2, dadurch gekennzeichnet, daß die Aufnahmevorrichtung unterhalb der mindestens einen Verschlußplatte (11) mindestens einen die untere Öffnung (3) überspannenden Träger (14) hat.

4. Vorrichtung nach einem der Ansprüche 1 bis 3, dadurch gekennzeichnet, daß die Druckplatte (6) ein ihre Durchlässe (7) überspannendes Vlies (9) hat.

5. Vorrichtung nach einem der Ansprüche 1 bis 4, dadurch gekennzeichnet, daß die Durchlässe (7) der durchlässigen Platte Ventile (8) aufweisen oder jeweils aus einem Spalt bestehen.

6. Vorrichtung nach Anspruch 5, dadurch gekennzeichnet, daß die Ventile nach außen öffnende Rückschlagventile, insbesondere Rückschlagklappen (8) sind.

7. Vorrichtung nach einem der Ansprüche 1 bis 6, dadurch gekennzeichnet, daß der Verschluß- und/oder Druckplattenantrieb (13, 10) hydraulisch ist.

## Claims

1. A device for removing and depositing sedimentary soil, sludge or other materials from or, respectively onto an underwater ground, comprising a hood-like receiving means which can be lowered onto and pressed into the underwater ground by means of a hydraulic lifting device, and means for displacing water from the receiving space, characterized in that the receiving means comprises a frame (1) including an upper and a lower opening (2, 3), at least a movable closure plate (11) including a drive means (13) for moving the closure plate between an open and a closed position and being associated to the lower opening (3), and a pressure plate (6) movably disposed within said frame (1), said pressure plate retaining solid matters and being uni-directionally pervious for water, and that said pressure plate is movable between said upper opening (2) and said lower opening (3) by means of a pressure plate driving device (10).

2. The device of claim 1, characterized in that said at least one closure plate is defined by a series of pivotal flaps (11, 11').

3. The device of claim 1 or 2, characterized in that the receiving means includes at least a support (14) bridging the lower opening (3) below said at least one closure plate (11).

4. The device of one of claims 1 to 3, characterized in that the pressure plate (6) includes a mat (9) covering passages (7) of said pressure plate.

5. The device of one of claims 1 to 4, characterized in that the passages (7) of the pervious plate include valves (8) or, respectively each consist of a slot.

6. The device of claim 5, characterized in that the valves are defined by check valves outwardly opening, in particular check valve flaps (8).

7. The device of one of claims 1 to 6, characterized in that the driving means (13, 10) for the closure plate and/or pressure plate are hydraulic.

## Revendications

1. Dispositif pour prélever d'un fond marin ou pour déposer sur ce fond marin, des sédiments, limons ou autres matériaux, comportant un récipient en forme de cloche qui peut être descendu sur le fond marin et être enfoncé dans celui-ci au moyen d'un dispositif de manutention hydraulique, et des moyens pour chasser l'eau de la chambre du récipient, caractérisé en ce que le récipient comporte un cadre (1) présentant une ouverture supérieure (2) et une ouverture inférieure (3), en ce qu'à l'ouverture inférieure (3) est associée au moins une plaque d'obturation mobile (11) pourvue d'un entraînement d'obturation (13) pour déplacer la plaque d'obturation entre une position d'ouverture et une position de fermeture, et en ce qu'une plaque de pression (6) perméable à l'eau dans au moins un sens, mais retenant des substances solides, est montée mobile dans le cadre (1), cette plaque de pression (6) étant réglable au moyen d'un entraînement (10) de plaque de pression entre l'ouverture supérieure (2) et l'ouverture inférieure (3).

2. Dispositif suivant la revendication 1, caractérisé en ce que ladite plaque d'obturation est formée d'une rangée de volets basculants (11, 11').

3. Dispositif suivant les revendications 1 ou 2, caractérisé en ce que le récipient comporte au moins une embase (14) sous-tendant l'ouverture inférieure (3) et située en dessous de la plaque d'obturation (11).

4. Dispositif suivant l'une des revendications 1 à 3, caractérisé en ce que la plaque de pression (6) comporte une membrane (9) tendue devant des passages (7) prévus dans cette plaque.

5. Dispositif suivant l'une des revendication 1 à 4, caractérisé en ce que les passages (7) de la plaque perméable à l'eau présentent des soupapes ou sont constitués chacun par une fente.

6. Dispositif suivant la revendication 5, caractérisé en ce que les soupapes sont des soupapes anti-retour s'ouvrant vers l'extérieur, et en particulier des clapets anti-retour (8).

7. Dispositif suivant l'une des revendications 1 à 6, caractérisé en ce que les entraînements de la plaque d'obturation et/ou de la plaque de pression (13, 10) sont de type hydraulique.
